Europäisches Patentamt

European Patent Office

Office européen des brevets

(19)

(11) Numéro de publication : **0 365 429 B1**

(12)                    **FASCICULE DE BREVET EUROPEEN**

(45) Date de publication du fascicule du brevet :
**17.06.92 Bulletin 92/25**

(51) Int. Cl.⁵ : **G09F 9/33**

(21) Numéro de dépôt : **89402888.5**

(22) Date de dépôt : **19.10.89**

---

(54) **Tableau d'affichage à éléments lumineux.**

---

(30) Priorité : **21.10.88 FR 8813869**

(43) Date de publication de la demande :
**25.04.90 Bulletin 90/17**

(45) Mention de la délivrance du brevet :
**17.06.92 Bulletin 92/25**

(84) Etats contractants désignés :
**AT BE CH DE ES GB GR IT LI LU NL SE**

(56) Documents cités :
**DE-A- 2 422 853
DE-A- 2 542 095
GB-A- 1 440 274
US-A- 3 631 461**

(73) Titulaire : **SOCIETE D'ETUDES POUR LE
DEVELOPPEMENT DES PRODUCTIONS
ELECTRONIQUES société anonyme
21, rue Claude Bernard Z.I. Coignières
Maurepas
F-78310 Maurepas (FR)**

(72) Inventeur : **Le Gars, Jacques
20, rue de la Citadelle
F-78950 Gambais (FR)**

(74) Mandataire : **Rodhain, Claude et al
Cabinet Claude Rodhain 30, rue la Boétie
F-75008 Paris (FR)**

EP 0 365 429 B1

## Description

La présente invention concerne les tableaux d'affichage à éléments lumineux tels que des diodes électroluminescentes par exemple.

Un grave inconvénient des tableaux d'affichage connus est leur manque de visibilité lorsqu'ils sont disposés en ambiance très éclairée, par exemple, dans le cas des tableaux en plein air, lorsque le temps est très ensoleillé.

En effet, dans ce cas, il n'est pas rare que l'éclairement dû au soleil atteigne 10 000 à 50 000 lux, c'est-à-dire 1 à 5 lumens par centimètre carré.

Ainsi, si l'on prend l'exemple d'un tableau d'affichage présentant une structure en mosaïque de matrices ou de barres à diodes électroluminescentes susceptibles de délivrer chacune un flux de quelques dizaines de millilumens sur des fenêtres ayant une surface de l'ordre du centimètre carré, entourées d'un fond devant lequel est disposé légèrement en avant des diodes électroluminescentes, un cache perforé de trous de passage pour la lumière émise par celles-ci, et que l'on voudrait ailleurs parfaitement noir, on constate que l'éclairement des zones lumineuses correspondant aux trous du cache et dû à la luminescence des diodes (donc quelques dizaines de millilumens par centimètre carré), n'est pas prépondérant par rapport à celui dû à la lumière ambiante (30 à 200 millilumens sur les zones noires, car il est difficile d'y abaisser les réflexions à moins de 3 ou 4%).

Pour minimiser cet inconvénient, on place, de manière classique, en avant du cache perforé (côté observateur), un filtre, généralement constitué d'une plaque de matière synthétique, de la même couleur que la couleur d'émission des éléments lumineux ; ainsi, la lumière émise par les éléments lumineux est transmise vers l'observateur dans sa majeure partie, tandis que le rayonnement dû à la lumière ambiante n'est pas transmis sur la surface d'affichage, sauf celui qui correspond à la couleur du filtre, ce qui diminue l'éclairement dû à cette lumière ambiante.

Cependant, il faut noter que les diodes électroluminescentes que l'on tend à utiliser de plus en plus émettent dans la gamme du jaune-orange, pour laquelle l'oeil humain possède une bonne sensibilité, de telle sorte que l'affichage soit le plus lisible possible dans les cas usuels, gamme qui est également privilégiée par le rayonnement solaire, ce qui entraîne que, dans cette gamme, le filtre (lui aussi jaune-orange) est relativement peu efficace, et en tout cas ne permet pas en pratique d'augmenter considérablement la lisibilité du tableau.

De manière classique, pour encore tenter d'accroître la lisibilité, on a cherché à augmenter la puissance des diodes électroluminescentes (ou des autres éléments lumineux utilisés).

Cependant, on se trouve ainsi confronté à des obstacles technologiques de plus en plus difficiles à surmonter.

L'invention a pour but de remédier à cet inconvénient, et concerne à cet effet un tableau d'affichage à éléments lumineux, tels que des diodes électroluminescentes isolées ou des groupes de diodes électroluminescentes, et analogues, émettant un rayonnement lumineux dans une gamme de couleur déterminée, dans lequel, devant toute la surface sur laquelle les fenêtres de sortie des éléments lumineux sont réparties avec des espaces entre elles, est disposé un filtre de la même couleur que celle du rayonnement émis par les éléments lumineux, tableau d'affichage caractérisé en ce qu'il comporte, devant les espaces entre lesdits éléments lumineux, un filtre de couleur complémentaire de celle dudit filtre disposé devant toute la surface sur laquelle sont réparties les fenêtres des éléments lumineux.

Grâce au filtre de couleur complémentaire disposé devant les espaces entre les éléments lumineux, éventuellement à la place du cache perforé habituel, la lisibilité du tableau est considérablement accrue.

D'autres caractéristiques et avantages de l'invention ressortiront de la description qui va suivre d'une forme de réalisation préférentielle de l'invention donnée à titre d'exemple non limitatif et représentée sur les dessins ci-joints dans lesquels :

– la figure 1 montre schématiquement la structure d'un tableau connu,

– la figure 2 montre schématiquement la structure d'un tableau selon l'invention,

– la figure 3 montre la courbe de transmission en fonction de la longueur d'onde, de filtres oranges mis en oeuvre dans des tableaux connus,

– la figure 4 montre la courbe de transmission en fonction de la longueur d'onde, de filtres de couleur complémentaire de celle des filtres de la figure 3, et

– la figure 5 montre la courbe de transmission correspondant à la mise en oeuvre conjointe d'un filtre de la figure 3 et d'un filtre de la figure 4.

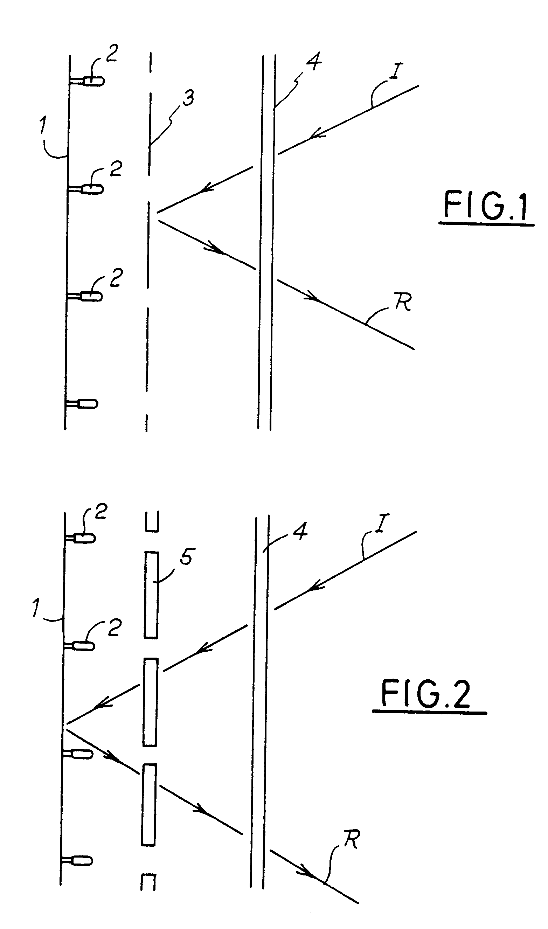

Le tableau d'affichage représenté sur la figure 1 comporte une plaque de circuit imprimé 1 sur laquelle sont implantés des éléments lumineux 2, à savoir ici des diodes électroluminescentes, réparties avec un certain espacement. La gamme de longueurs d'ondes dans laquelle émettent les diodes électroluminescentes est ici la gamme de l'orange. Devant la plaque de circuit imprimé 1, est disposé un cache 3 perforé de trous en regard des diodes électroluminescentes ; ainsi, sur toute la surface sur laquelle les fenêtres de sortie des éléments lumineux sont réparties, le cache masque, pour les rayons incidents I de lumière ambiante, les espaces entre les diodes et seulement ces espaces. Un filtre 4 teinté de la même couleur que celle du rayonnement émis par les diodes, et généralement traité anti-reflets, est également disposé devant toute la plaque de circuit imprimé ; ainsi, théoriquement, toutes les composantes de la lumière ambiante, sauf ici l'orange, sont éliminées de l'espace entre ce filtre et le cache.

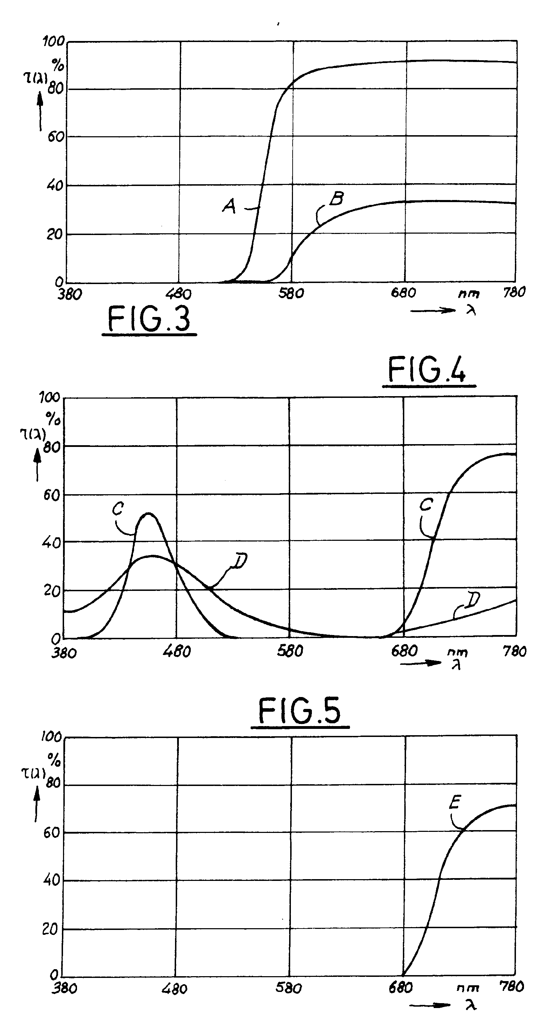

La courbe de transmission de tels filtres (en fait ici plutôt orange-rouge) en fonction de la longueur d'onde, est représentée sur la figure 3. On constate en tout cas qu'à la longueur d'onde 580 nm, un bon filtre (ici référencé A) transmet plus de 80% de la lumière, alors qu'il n'en transmet que moins de 5% à 530 nm, l'autre filtre (ici référencé B) étant moins efficace ; dans le cas présent, ces filtres sont proches de leur transmission maximale dans toute la bande visible depuis le jaune pour le plus performant, et l'orange pour l'autre.

Avec le premier filtre A, à 580 nm, environ 80% de la lumière orange émise par les diodes est donc transmise à l'observateur, tandis que, la réflexion du cache étant de 3 à 4%, celui-ci renvoie 2,4 à 3,2% de la lumière orange ambiante, et le rayon réfléchi jusqu'à l'observateur véhicule environ de 1,9 à 2,6% de cette lumière (rayon réfléchi R).

Selon l'invention (figure 2), devant une plaque de circuit imprimé 1, est disposé un filtre 5, de couleur complémentaire de celle d'un filtre 4, perforé de trous en regard des diodes électroluminescentes 2 (les mêmes organes sont référencés par les mêmes repères sur les figures 1 et 2) ; ainsi, sur toute la surface sur laquelle les fenêtres de sortie des éléments lumineux sont réparties, le filtre de couleur complémentaire 5 (ici bleu) masque les espaces entre les diodes mais laisse le libre passage aux rayons lumineux issus de celles-ci. Comme on le comprendra aux explications qui vont suivre, ce filtre est beaucoup plus efficace qu'un cache, car son coefficient de réflexion est très faible, et son coefficient de transmission également.

La courbe de transmission de tels filtres bleu est représentée sur la figure 4. On constate qu'aux longueurs d'onde correspondant au jaune, et sur une large gamme au-delà, la transmission de ces filtres est très faible. Par exemple un premier filtre (référencé C) présente un "pic" de transmission dans le bleu (vers 450 nm), un coefficient de transmission très faible de 530 nm à 680 nm, pour reprendre une transmission de plus en plus grande jusqu'à 750 nm environ (rouge proche de la limite du rouge et de l'infra-rouge). Un autre filtre (référencé D) présente un pic de transmission dans le bleu beaucoup plus amorti, avec un "pied" plus large, mais la gamme de très faible transmission est beaucoup plus étroite ; en revanche, la transmission dans le rouge et l'infra-rouge reste faible. On pourrait donc être tenté d'utiliser ce dernier filtre combiné avec un filtre orange, puisque sa transmission est presque toujours faible, ou même très faible.

On remarque cependant qu'en fait, le filtre bleu C est plus approprié, car sa transmission est très faible précisément dans la zone où le filtre orange A (qui permet une transmission presque parfaite de la lumière des diodes) est "passant", sauf à partir de 680 nm.

Il résulte donc de la conjugaison dans l'espace entre les diodes, de ces deux filtres A et C (dont les réflexions parasites peuvent être aisément maintenues à un taux très faible, éventuellement au moyen d'un traitement anti-reflets), que la transmission de la lumière ambiante (rayon incident I) au niveau du circuit imprimé est déjà inférieure à la transmission au niveau du cache dans le cas des tableaux conventionnels (divisée par plus de 10 en-dessous de 430 nm et au-dessus de 500 nm jusqu'à 680 nm, divisée par 2 seulement vers 450 nm, avec une zone intermédiaire de 430 nm à 450 nm et de 450 nm à 500 nm), ce que ne peut pas montrer à cause de l'échelle la courbe résultante de la figure 5.

Si l'on compare ces résultats à ceux obtenus au moyen d'un cache noir, la différence peut paraître néanmoins peu significative.

Cependant, ce n'est en fait pas la quantité de lumière ambiante qui atteint l'espace entre les diodes qui est importante, mais celle qui revient sur la rétine de l'observateur après avoir traversé deux fois le système de filtres, une fois à l'aller, et une fois au retour (rayon réfléchi R).

On notera donc que l'atténuation dûe au système de filtres est le carré de l'atténuation mentionnée précédemment : la lumière parvenant à l'observateur dans l'hypothèse d'une réflexion de 100% au niveau du circuit imprimé est en conséquence divisée par plus de 100 en-dessous de 430 nm et au-dessus de 500 nm jusqu'à 680 nm, et divisée par 4 seulement vers 450 nm, avec une zone intermédiaire de 430 nm à 450 nm et de 450 nm à 500 nm ; comme il est aisé d'obtenir par un revêtement approprié que la réflexion au niveau du circuit imprimé soit de l'ordre de 20%, les taux de réduction passent respectivement à plus de 500 en-dessous de 430 nm et au-dessus de 500 nm jusqu'à 680 nm, et 20 vers 450 nm, ce qui est cette fois très avantageux vis-à-vis du cas où l'on a simplement deux traversées d'un filtre orange respectivement avant et après une réflexion sur un cache noir réfléchissant 3 à 4% de la lumière incidente.

En résumé, le remplacement du cache noir par le filtre de couleur complémentaire à la couleur d'émission des diodes correspond à un remplacement du coefficient de réflexion de ce cache par le carré du coefficient de transmission du filtre complémentaire multiplié par le coefficient de réflexion de la plaque de circuit imprimé, aux réflexions parasites sur la face avant du filtre près.

De plus, le très faible pic de transmission (il est invisible sur la figure 5) de ce filtre complémentaire vers 450 nm n'est pas gênant, car d'une part étant très étroit il ne correspond pas à un éclairement important, et d'autre part il se situe dans le bleu, couleur complémentaire de la couleur d'émission des diodes. Le fait que l'atténuation ne soit plus très importante au-delà de 680 nm est également de peu d'importance, car le spectre solaire ne contient que très peu de lumière dans cette gamme aux heures "lumineuses" de la journée.

En tout état de cause on constate d'ailleurs bien en pratique la notable amélioration escomptée.

Plus précisément, la matière constituant les filtres est une matière synthétique connue commercialement sous le nom de PLEXIGLAS, les filtres orange-rouge portant respectivement les références 478g01 (A), 466g33 (B), et les filtres bleu les références 627g01 (C) et 648g01 (D).

Il est naturellement possible d'améliorer encore le résultat en ne remplaçant pas le cache par le filtre supplémentaire, mais en insérant le filtre entre le cache et le filtre de même couleur que l'émission des diodes.

Bien entendu, l'invention n'est pas limitée à la forme de réalisation ci-dessus décrite et représentée, et on pourra en prévoir d'autres formes sans sortir de son cadre, notamment pour des couleurs d'émissions autres que l'orange, et avec des éléments autres que des diodes électroluminescentes, par exemple des tubes à décharge tels que des tubes au néon, et des tubes connus sous le nom de tube "Nixie" ; on doit noter également que tandis que l'exemple décrit des éléments sous la forme de diodes électroluminescentes isolées, les éléments lumineux devant lesquels le filtre complémentaire comporte une ouverture peuvent être constitués de groupes de diodes (ou de tubes à décharge ou analogues) éventuellement de couleurs différentes qui sont appelées à être mélangées (diodes vertes et diodes rouges par exemple).

## Revendications

1. Tableau d'affichage à éléments lumineux (2) tels que des diodes électroluminescentes isolées ou des groupes de diodes électroluminescentes, et analogues, émettant un rayonnement lumineux dans une gamme de couleur déterminée, dans lequel, devant toute la surface sur laquelle les fenêtres de sortie des éléments lumineux (2) sont réparties avec des espaces entre elles, est disposé un filtre (4) de la même couleur que celle du rayonnement émis par les éléments lumineux, tableau d'affichage caractérisé en ce qu'il comporte, devant les espaces entre lesdits éléments lumineux (2), un filtre (5) de couleur complémentaire de celle dudit filtre (4) disposé devant toute la surface sur laquelle sont réparties les fenêtres des éléments lumineux.

2. Tableau d'affichage selon la revendication 1, caractérisé en ce que ledit filtre (5) de couleur complémentaire s'étendant devant les espaces entre les éléments lumineux (2) est une plaque perforée de trous en regard desdits éléments lumineux.

3. Tableau d'affichage selon la revendication 1, caractérisé en ce qu'au moins l'un des deux filtres (4, 5) comporte un traitement anti-reflets.

4. Tableau d'affichage selon la revendication 1, caractérisé en ce qu'il comporte, du côté dudit filtre (5) de couleur complémentaire s'étendant devant les espaces entre les éléments lumineux (2), qui est opposé au filtre (4) disposé devant toute la surface sur laquelle sont réparties les fenêtres des éléments lumineux, un cache (3) percé de trous en regard desdites fenêtres.

5. Tableau d'affichage selon la revendication 1, caractérisé en ce que les éléments lumineux (2) sont montés sur une plaque (1) munie d'un revêtement anti-réfléchissant.

6. Tableau d'affichage selon la revendication 1, caractérisé en ce que les éléments lumineux (2) émettent un rayonnement dans la gamme des longueurs d'ondes correpsondant à la couleur orange.

7. Tableau d'affichage selon la revendication 1, caractérisé en ce que ledit filtre (5) de couleur complémentaire est un filtre bleu.

## Patentansprüche

1. Anzeigetafel mit Leuchtelementen (2), wie einzelnen Leuchtdioden oder Gruppen von Leuchtdioden, oder ähnlichem, die Licht in einem bestimmten Farbspektrum aussenden, in der vor der ganzen Fläche, über die Abstrahlungsfenster der Leuchtelemente (2) mit Abstand voneinander verteilt sind, ein Filter (4) derselben Farbe, wie der von den Leuchtelementen ausgesandten Strahlung, angeordnet ist, Anzeigetafel, dadurch gekennzeichnet, daß sie vor den Zwischenräumen zwischen den genannten Leuchtelementen (2) einen Filter (5) in der zu der des genannten Filters (4), der vor der ganzen Fläche, über die die Fenster der Leuchtelemente verteilt sind, komplementären Farbe trägt.

2. Anzeigetafel gemäß Patentanspruch 1, dadurch gekennzeichnet, daß der genannte sich vor den Zwischenräumen zwischen den Leuchtelementen (2) befindende Filter (5) in Komplementärfarbe eine Platte mit Löchern gegenüber den genannten Leuchtelementen ist.

3. Anzeigetafel gemäß Patentanspruch 1, dadurch gekennzeichnet, daß mindestens einer der beiden Filter (4, 5) entspiegelt ist.

4. Anzeigetafel gemäß Patentanspruch 1, dadurch gekennzeichnet, daß sie auf der Seite des gennanten sich vor den Zwischenräumen zwischen den Leuchtelementen (2) befindenden Filters (5) in Komplementärfarbe, die dem vor der ganzen Fläche, über die die Fenster der Leuchtelemente verteilt sind, angeordneten Filter (4) abgewandt ist, eine Maske (3) mit den genannten Fenstern gegenüberliegenden Löchern aufweist.

5. Anzeigetafel gemäß Patentanspruch 1, dadurch gekennzeichnet, daß die Leuchtelemente (2) auf einer Platte (1) mit Entspiegelungsbeschichtung angebracht sind.

6. Anzeigetafel gemäß Patentanspruch 1, dadurch gekennzeichnet, daß die Leuchtelemente (2) eine Strahlung im der Farbe Orange entsprechenden Wellenlängenbereich aussenden.

7. Anzeigetafel gemäß Patentanspruch 1, dadurch gekennzeichnet, daß der genannte Filter (5) in Komplementärfarbe ein Blaufilter ist.


**Claims**

1. A display table with luninous elements (2) such as isolated electroluminescent diodes or groups of electroluminescent diodes, and the like, emitting luminous radiation within a predetermined colour range, in which display table, in front of the entire surface on which the outlet windows of the luminous elements (2) are distributed with spaces between them, is arranged a filter (4) having the same colour as that of the radiation emitted by the luminous elements, the display table being characterised in that it comprises, in front of the spaces between said luminous elements (2), a filter (5) having a colour which is complementary to that of the filter (4) arranged in front of the entire surface on which the windows of the luminous elements are arranged.

2. A display table according to claim 1, characterised in that the said complementary colour filtre (5) extending in front of the spaces between the luminous elements (2) is a plate perforated with holes opposite the luminous elements.

3. A display table according to claim 1, characterised in that at least one of the two filters (4, 5) comprises an anti-reflective treatment.

4. A display table according to claim 1, characterised in that, adjacent said complementary colour filter (5) which extends in front of the spaces between the luminous elements (2) and is opposite the filter (4) arranged in front of the entire surface on which the windows of the luminous elements are distributed, the display able comprises a screen (3) perforated with holes opposite said windows.

5. A display table according to claim 1, characterised in that the luninous elements (2) are mounted on a plate (1) provided with a anti-reflective coating.

6. A display table according to claim 1, characterised in that the luminous elements (2) emit radiation within a range of wave lengths corresponding to the colour orange.

7. A display table according to claim 1, characterised in that the complementary colour filter (5) is a blue filter.

FIG.1

FIG.2

FIG.3

FIG.4

FIG.5